# EUROPÄISCHE PATENTSCHRIFT

(11) **EP 1 706 716 B1**
(45) Veröffentlichungstag und Bekanntmachung des Hinweises auf die Patenterteilung: **14.09.2011**
(21) Anmeldenummer: 05700829.4
(22) Anmeldetag: 12.01.2005
(51) Int. Cl.: G01L 3/10

(54) **VORRICHTUNG ZUM BESTIMMEN EINES LENKWINKELS UND EINES AN EINER LENKWELLE AUSGEÜBTEN DREHMOMENTS**
DEVICE FOR DETERMINING A STEERING ANGLE AND A TORQUE THAT IS EXERTED ON A STEERING SHAFT
DISPOSITIF POUR DETERMINER UN ANGLE DE BRAQUAGE ET UN COUPLE DE ROTATION EXERCE SUR UN ARBRE DE DIRECTION

(30) Priorität: 20.01.2004 DE 202004020418 U; 20.01.2004 DE 202004020419 U; 20.01.2004 DE 202004020417 U; 05.05.2004 DE 102004023801
(43) Veröffentlichungstag der Anmeldung: 04.10.2006
(73) Patentinhaber: Valeo Schalter und Sensoren GmbH, 74321 Bietigheim-Bissingen (DE)
(72) Erfinder: JEREMS, Frank, 74369 Löchgau (DE); RACHUI, Dirk, 74321 Bietigheim-Bissingen (DE); FRÖHLICH, Ekkehart, 74226 Nordheim (DE); RUETZ, Christian, 71636 Ludwigsburg (DE)
(74) Vertreter: Pothmann, Karsten
(86) Internationale Anmeldenummer: PCT/EP2005/000201
(87) Internationale Veröffentlichungsnummer: WO 2005/068962

(56) Entgegenhaltungen:
- EP-A2- 1 344 711
- EP-A2- 1 344 711
- DE-A1- 10 048 579
- US-A- 6 018 691
- US-A1- 2003 209 087
- PATENT ABSTRACTS OF JAPAN Bd. 2002, Nr. 10, 10. Oktober 2002 (2002-10-10) & JP 2002 168651 A (YAZAKI CORP), 14. Juni 2002 (2002-06-14)
- PATENT ABSTRACTS OF JAPAN Bd. 1999, Nr. 08, 30. Juni 1999 (1999-06-30) & JP 11 072352 A (MITSUBISHI MATERIALS CORP; NIPPON AUTOM KK), 16. März 1999 (1999-03-16)

## Beschreibung

Die Erfindung betrifft eine Vorrichtung zum Bestimmen eines auf eine Welle ausgeübten Drehmoments, wobei die Welle einen ersten Wellenabschnitt und einen zweiten Wellenabschnitt aufweist und die beiden Wellenabschnitte gegeneinander verdrehbar sind, mit einem den ersten Wellenabschnitt umgebenden und mit diesem verbundenen Multipol-Magnetring und einem am zweiten Wellenabschnitt befestigten Statorhalter, wobei am Statorhalter zwei Statorelemente befestigt sind und jedes Statorelement in axialer oder radialer Richtung abragende Finger aufweist, die gleichmäßig zumindest über einen Teil des Umfangs verteilt angeordnet sind und zwischen sich Lücken aufweisen, wobei den Fingern des einen Statorelements und den Fingern des anderen Statorelements der Magnetring zugeordnet ist.

Bekannt ist, dass der Lenkwinkel mit einer Codescheibe und einem die Codescheibe abtastenden optischen Sensor erfasst wird, wobei der optische Sensor ortsfest und die Codescheibe an der Lenkwelle fixiert ist, oder umgekehrt.

Mit der wachsenden Verbreitung von Regelsystemen zur Regelung der Fahrdynamik von Kraftfahrzeugen hat die Bedeutung von Lenkwinkelsensoren erheblich zugenommen. Derartige Sensoren haben die Aufgabe, ein Signal zu erzeugen, welches kennzeichnend für den Lenkwinkel bzw. die Lenkwinkeländerung eines Fahrzeugs ist. Hierzu ist in der Regel ein Codierelement, insbesondere eine Codescheibe starr mit der Lenkwelle verbunden. Der Codescheibe ist ein optischer Sensor zugeordnet, welcher gegenüber dem Chassis bzw. der Lenkwelle fixiert ist, und welcher in der Lage ist, den Code der Codescheibe zu lesen. Dabei sind an der Scheibe, z.B. in Form von Strichen oder Auskerbungen, Markierungen angebracht, welche abgetastet werden. Der optische Sensor kann aus einer Leuchtdiode (DE 199 36 245 A1), einem Lichtleiterelement und einer mehrere Lichtempfänger umfassenden Abtasteinheit bestehen. Das digitale Abtastprinzip zeichnet sich hierbei durch eine hohe Robustheit aus.

Weitere Vorrichtungen zur Messung des Lenkwinkels sind aus der DE 101 10 785 A1, der DE 100 41 095 A1, der DE 101 42 448 A1, der WO 99 39 169 A1, die auf optischem Wege arbeiten, aus der DE 199 41 464 A1, die auf induktivem Wege arbeitet, und aus der DE 197 47 638 C1, der DE 199 00 330 A1, der DE 195 06 938 A1, der DE 100 36 281 A1, der WO 2002 071 019 A1 und der DE 102 22 118 A1, die auf magnetischem Wege arbeitet, bekannt. Für Applikationen im Motorraum sind optische Verfahren weniger geeignet, da durch höhere Temperaturen, Öl, Fett und Schmutz eine Störung des optischen Systems zu befürchten ist.

Mit derartigen Anordnungen können der absolute Lenkwinkel, die Lenkrichtung, die Lenkgeschwindigkeit und die Lenkbeschleunigung relativ präzise ermittelt werden, jedoch sind diese Daten, z.B. für eine elektromechanische Lenkhilfe (EPAS), zu wenig. Darüber hinaus werden die Richtung und die Größe des Lenkdrehmoments benötigt.

Die bekannten optischen Verfahren haben alle die Eigenschaft, dass die für die Drehmomentmessung notwendige Genauigkeit der Messung des Differenzwinkels zwischen Ein- und Ausgangswelle eines Torsionsstücks in einer Größenordnung kleiner als 0,05° liegen muss. Dies stellt die abbildende Optik vor Probleme, da die Messung der Lage von Strukturkanten aufgrund der direkten optischen Abbildung auf den Detektor deutlich besser sein muss, als der Abstand der Pixel der verwendeten optischen Sensorarrays. Die Messung des Drehmoments an den beiden Enden eines Torsionsstücks mittels optischer Sensoren ist z.B. aus der WO 99 09 385 A1 bekannt. Die Abtastung eines Musters an einer Encoderscheibe mittels einer Optik ist z.B. aus der EP 0 777 851 A1 bekannt.

Analoge optische Verfahren, wie oben erwähnt, sind für die Messung kleiner Verdrehwinkel in Lenksystemen zur Bestimmung des Drehmoments weniger geeignet, da sie weniger robust sind. Vor allem bei der Verwendung des Sensors an einem Lenkgetriebe im Motorraum besteht, wie bereits erwähnt, durch die dort herrschenden höheren Temperaturen und durch den Anfall von Öl, Fett und Staub die Gefahr einer Störung eines derart hoch auflösenden analogen optischen Systems. Optische Sensoren im Motorraum sind dann geeignet, wenn sie digital und mit grober Auflösung arbeiten. Analoge optische Sensoren mit hoher Auflösung erscheinen aber weniger geeignet.

Magnetische Verfahren zur Drehmomentmessung arbeiten mit magnetischen Multipolrädern und magnetoresistiven Sensoren. Der Magnetfeldsensor erfasst die relative Lage der Magnetpole (DE 198 28 513 A1). Dadurch wird der geringe mechanische Verdrehwinkel in eine große elektrische Signaländerung transformiert und eine hohe Messgenauigkeit erzielt.

Aus der DE 102 30 347 A1 und der US 2003/0209087 A1 ist eine Vorrichtung zum Messen des Lenkwinkels und des Drehmoments bekannt, die das magnetisch messende Hall-Sensor-Prinzip benutzt.

Aus der JP 2002 168651 A und der JP 11 072352 A ist ein Lenkwinkelsensor bekannt, bei welchem ein Magnetring und Hall-Sensoren verwendet werden. Schließlich ist aus der EP 1 344 711 A eine Vorrichtung bekannt, mit der sowohl das Drehmoment als auch der Lenkwinkel erfasst werden kann.

Der Erfindung liegt daher die Aufgabe zugrunde, eine Vorrichtung der eingangs genannten Art dahingehend weiterzubilden, dass die für das ESP (Electronic Stability Program) und EPS (Electric Power Steering) notwendigen Lenkinformationen aus einem einzigen Gerät kostengünstig und robust ermittelt werden können.

Diese Aufgabe wird mit einer Vorrichtung gelöst, die die Merkmale des Anspruchs 1 aufweist.

Mit der erfindungsgemäßen Vorrichtung kann der Absolutwinkel einer Lenkwelle und gleichzeitig das auf die Lenkwelle ausgeübte Drehmoment auf magnetischem Wege gemessen werden. Hierdurch wird der wesentliche Vorteil erzielt, dass auf optische Verfahren verzichtet werden kann, so dass Verschmutzungen und Einflüsse durch Öl, Fett und Temperatur wesentlich geringere Auswirkungen auf das Messergebnis haben.

Bevorzugt ist mit der erfindungsgemäßen Vorrichtung nicht nur das Drehmoment und der absolute Lenkwinkel, sondern sind auch die Lenkgeschwindigkeit und die Lenkbeschleunigung messbar beziehungsweise berechenbar. Dabei können die Signale analog oder digital weiterverarbeitet und/oder entsprechend den Steuergeräten in einem Kraftfahrzeug zur Verfügung gestellt werden.

Zur Erhöhung der Genauigkeit sind erfindungsgemäß bei einem Ausführungsbeispiel zwei Magnetspuren vorgesehen, die eine unterschiedliche Anzahl an Magnetpolen besitzt. Jeder Magnetspur ist dabei ein Sensor zugeordnet, so dass aus den wechselnden Sensorsignalen ein absoluter Lenkwinkel gemessen werden kann, der genauer als 1° ist, insbesondere im Bereich von 0,03° bis 0,5° liegt. Die Ausgestaltung eines derartigen Magnetringes ist insbesondere in den prioritätsbegründenden Anmeldungen enthalten, worauf vollinhaltlich Bezug genommen wird.

Bei einer Weiterbildung ist vorgesehen, dass der zweite Magnetring ein Multipolmagnetring ist. Abhängig davon, wie viel Magnetpole über den Umfang des Magnetringes angeordnet sind, kann die Genauigkeit des Lenkwinkels eingestellt werden.

Eine wesentliche Vereinfachung des Aufbaus wird dadurch erzielt, dass eine einzige Platine zur Aufnahme der den Statorelementen zugeordneten Sensoren und des wenigstens einen, dem zweiten Magnetring zugeordneten Sensor vorgesehen ist. Diese Platine ist zu ihrem Schutz in einem Gehäuse untergebracht. Dies hat den wesentlichen Vorteil, dass zu Wartungs- oder Reparaturzwecken lediglich das Gehäuse ausgetauscht werden muss, wodurch alle elektronischen Bauelemente ersetzt werden können.

Bei einer Variante der Erfindung ist vorgesehen, dass der Statorhalter eine Außenverzahnung aufweist und die Außenverzahnung mit einem Zahnrad kämmt und ein Übersetzungsgetriebe bildet. Mit dieser Ausgestaltung wird die Möglichkeit geschaffen, einen Absolutwinkel über mehrere Umdrehungen, insbesondere über 1.480°, also mehr als 4 Umdrehungen, zu erfassen. Die Messung erfolgt dabei ebenfalls auf elektronischem Wege, indem das Zahnrad mit einem Magnet bestückt ist und dem Magnet ein Sensor zugeordnet ist. Dabei ist der Sensor in bevorzugter Weise ebenfalls auf der Platine angeordnet.

Um die Sensoren in einer Ebene platzieren zu können, ist die Achse des Zahnrades orthogonal zur Welle ausgerichtet. Bei einer Variante kann die Achse des Zahnrades auch parallel zur Welle verlaufen.

Weitere Vorteile, Merkmale und Einzelheiten der Erfindung ergeben sich aus der nachfolgenden Beschreibung, in der unter Bezugnahme auf die Zeichnung besonders bevorzugte Ausführungsbeispiele im Einzelnen beschrieben sind. Dabei können die in der Zeichnung dargestellten sowie in den Ansprüchen und in der Beschreibung erwähnten Merkmale jeweils einzeln für sich oder in beliebiger Kombination erfindungswesentlich sein.

In der Zeichnung zeigen:
- Figur 1: eine Explosionsdarstellung einer ersten Ausführungsform der erfindungsgemäßen Vorrichtung;
- Figur 2: die Ansicht gemäß Figur 1 von hinten und unten;
- Figuren 3a und 3b: die Vorrichtung gemäß der Figuren 1 und 2 zusammengebaut;
- Figur 4: eine Explosionsdarstellung einer zweiten Ausführungsfor m der erfindungsgemäßen Vorrichtung;
- Figuren 5a und 5b: die Vorrichtung gemäß Figur 4 zusammengebaut; und
- Figur 6: einen Längsschnitt durch die zweite Ausführungsform der erfindungsgemäßen Vorrichtung.

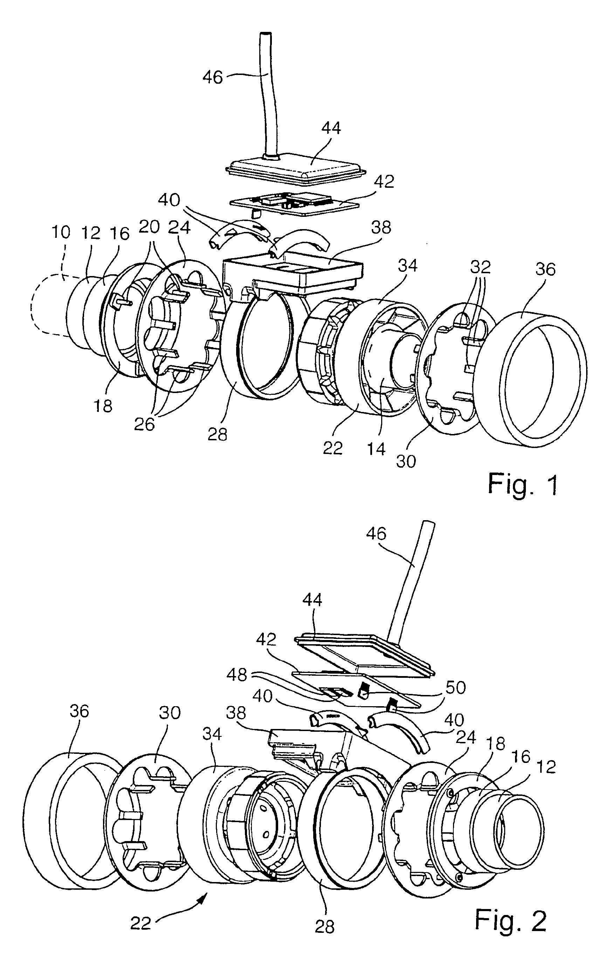

Die Figur 1 zeigt andeutungsweise eine mit 10 bezeichnete Lenkwelle eines Kraftfahrzeugs, von der zwei Wellenabschnitte 12 und 14 erkennbar sind, die über eine (nicht dargestellte) Torsionsstabfeder miteinander verbunden sind, so dass die beiden Wellenabschnitte 12 und 14 relativ zueinander verdreht werden können, wenn auf die Lenkwelle 10 ein Drehmoment aufgebracht wird. Die Kopplung der beiden Wellenabschnitte 12 und 14 ist zum Beispiel deutlich aus der DE 102 56 322 A1 erkennbar, auf welche vollinhaltlich Bezug genommen wird. Der Wellenabschnitt 12 ist mit einem Halter für einen Multipol-Magnetring 16 versehen, der die Lenkwelle 10 umgreift.

Ferner ist in der Figur 1 ein Schraubring 18 erkennbar, welcher über drei Schrauben 20, die am Umfang verteilt angeordnet sind und axial abragen, mit einem Statorhalter 22 verschraubt ist. Zwischen dem Schraubring 18 und dem Statorhalter 22 befindet sich ein erstes Statorelement 24, welches axial abragende Finger 26 aufweist, die den Multipol-Magnetring 16 übergreifen. Das heißt, der Magnetring 16 befindet sich radial innerhalb der Finger 26. Außerdem ist ein Gleitring 28 erkennbar, in welchem der Statorhalter 22 gelagert ist. In den Statorhalter greifen von der einen Seite die Finger 26 und von der anderen Seite der in der Figur 1 links dargestellte Teil des Statorhalters 22 ein.

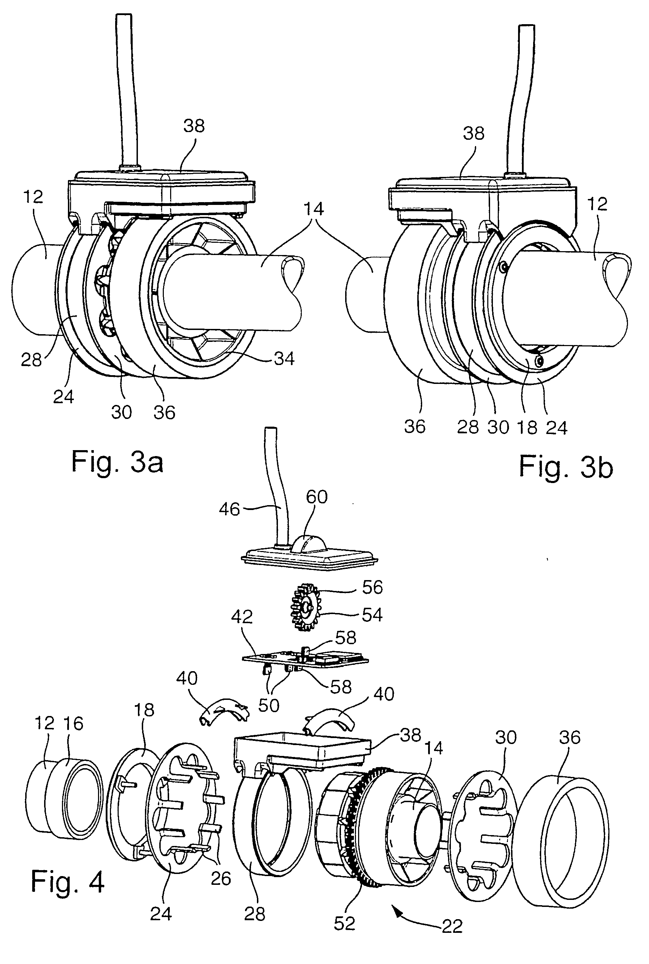

Die Figur 1 zeigt ein zweites Statorelement 30, welches mit dem Statorelement 24 identisch ist, jedoch so angeordnet ist, dass dessen Finger 32 in Richtung auf die Finger 26 weisen. Dieses Statorelement 30 ist, wie auch aus den Figuren 3a- und 3b ersichtlich, derart am Statorhalter 22 angeordnet, dass die Finger 32 in den Gleitring 28 hineinragen. Über den Statorhalter 22 werden außerdem die Statorelemente 24 und 30 fixiert.

Der Statorhalter 22 besitzt noch einen Träger 34 für einen Zweispur-Multipol-Magnetring 36, der auf diesen axial aufgeschoben ist. Dies ist ebenfalls deutlich in der Figur 3a erkennbar. Der Gleitring 28 ist Teil eines insgesamt mit 38 bezeichneten Gehäuses, in welchem Flusskonzentratoren 40 sowie eine Platine 42 untergebracht sind. Das Gehäuse 38 ist mittels eines Gehäusedeckels 44 verschlossen, aus welchem ein Kabelstrang 46 herausgeleitet ist.

In Figur 2 ist deutlich erkennbar, dass an der Unterseite der Platine 42 Sensoren 48 und 50 angeordnet sind, die als Hall-Sensoren ausgebildet sind. Dabei sind die Sensoren 48 in axialer Richtung gesehen nebeneinander angeordnet und dem Zweispur-Multipol-Magnetring 36 zugeordnet. Die beiden Sensoren 50 sind den beiden Flusskonzentratoren 40 zugeordnet und erfassen die Verdrehung der beiden Statorelemente 24 und 30 gegenüber dem Magnetring 16.

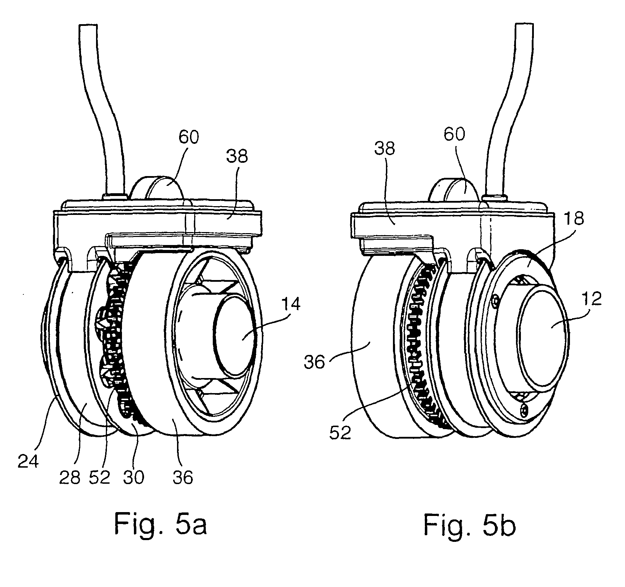

In den Figuren 4, 5a und 5b ist ein zweites Ausführungsbeispiel dargestellt, bei welchem gleiche Bauteile gleiche Bezugszeichen tragen. Bei diesem Ausführungsbeispiel besitzt der Statorhalter 22 zusätzlich eine Außenverzahnung 52, welche mit einem Zahnrad 54 kämmt, welches im Gehäuse 38 drehbar gelagert ist. Das Zahnrad 54 trägt wenigstens einen Magnet 56, dem beim dargestellten Ausführungsbeispiel zwei Sensoren 58, die ebenfalls als Hall-Sensoren ausgebildet sind, zugeordnet sind. Diese Sensoren 58 sind ebenfalls auf der Platine 42 angeordnet.

Mit der Außenverzahnung 52 sowie dem Zahnrad 54 wird ein Übersetzungsgetriebe gebildet, mit dem volle Umdrehungen des Statorhalters 22 und somit der Lenkwelle 10 erfasst werden können. Die Außenverzahnung 52 und das Zahnrad 54 können auch in Form einer Kegelverzahnung ausgebildet werden, so dass die Achse des Zahnrads 54 orthogonal zur Achse der Lenkwelle 10 steht und die Sensoren 58 dann flächig auf der Platine 42 angeordnet werden können. Außerdem bedarf es dann keiner Ausbuchtung 60 im Gehäuse 38 zur Aufnahme des Zahnrades 54.

Die Statorelemente 24 und 30 und die Sensoren 50 sind zur Ermittlung des aufgebrachten Drehmoments und der Zweispur-Multipol-Magnetring 36 zusammen mit den Sensoren 38 zur Ermittlung des Lenkwinkels bestimmt. Mit der Außenverzahnung 52, dem Zahnrad 54 sowie den beiden Sensoren 58 wird die Anzahl der Umdrehungen erfasst. Das ganze System basiert auf magnetischen Messelementen.

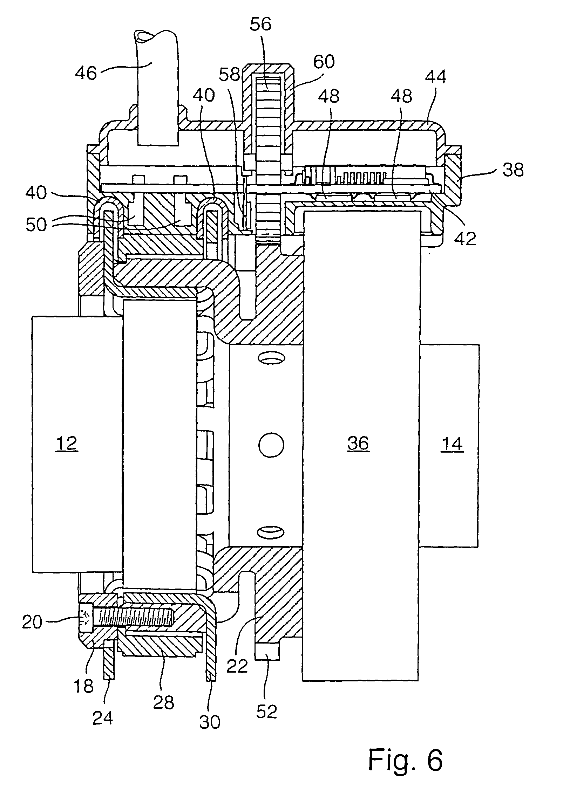

Aus Figur 6 ist deutlich die Zuordnung der einzelnen Bauteile zueinander erkennbar.

## Patentansprüche

1. Vorrichtung zum Bestimmen eines auf eine Welle (10) ausgeübten Drehmoments, wobei die Welle (10) einen ersten Wellenabschnitt (12) und einen zweiten Wellenabschnitt (14) aufweist und die beiden Wellenabschnitte (12 und 14) gegeneinander verdrehbar sind, mit einem den ersten Wellenabschnitt (12) umgebenden und mit diesem verbundenen Multipol-Magnetring (16) und einem am zweiten Wellenabschnitt (14) befestigten Statorhalter (22), wobei am Statorhalter (22) zwei Statorelemente (24, 30) befestigt sind und jedes Statorelement (24, 30) in axialer oder radialer Richtung abragende Finger (26, 32) aufweist, die gleichmäßig zumindest über einen Teil des Umfangs verteilt angeordnet sind und zwischen sich Lücken aufweisen, wobei den Fingern (26) des einen Statorelements (24) und den Fingern (32) des anderen Statorelements (30) der Magnetring (16) zugeordnet ist, **dadurch gekennzeichnet, dass** auf einem der beiden Wellenabschnitte (12, 14) ein zweiter Magnetring (36) angeordnet ist und diesem Magnetring (36) zumindest ein Magnetsensor (48) zugeordnet ist und dass der zweite Magnetring (36) zwei Magnetspuren aufweist.

2. Vorrichtung nach Anspruch 1, **dadurch gekennzeichnet, dass** der zweite Magnetring (36) ein Multipolmagnetring ist.

3. Vorrichtung nach einem der vorhergehenden Ansprüche, **dadurch gekennzeichnet, dass** jeder Magnetspur ein Magnetsensor (48) zugeordnet ist.

4. Vorrichtung nach einem der vorhergehenden Ansprüche, **dadurch gekennzeichnet, dass** eine einzige Platine (42) zur Aufnahme der den Statorelementen (24, 30) zugeordneten Sensoren (50) und des wenigstens einen dem zweiten Magnetring (36) zugeordneten Sensor (48) vorgesehen ist.

5. Vorrichtung nach Anspruch 4, **dadurch gekennzeichnet, dass** die Platine (42) in einem Gehäuse (38) untergebracht ist.

6. Vorrichtung nach einem der vorhergehenden Ansprüche, **dadurch gekennzeichnet, dass** der Statorhalter (22) eine Außenverzahnung (52) aufweist und die Außenverzahnung (52) mit einem Zahnrad (54) kämmt und ein Übersetzungsgetriebe bildet.

7. Vorrichtung nach Anspruch 6, **dadurch gekennzeichnet, dass** das Zahnrad (54) mit einem Magnet (56) bestückt ist.

8. Vorrichtung nach Anspruch 7, **dadurch gekennzeichnet, dass** dem Magnet (56) ein Sensor (58) zugeordnet ist.

9. Vorrichtung nach Anspruch 4 und Anspruch 8, **dadurch gekennzeichnet, dass** der Sensor (58) auf der Platine (42) angeordnet ist.

10. Vorrichtung nach einem der Ansprüche 6 bis 9, **dadurch gekennzeichnet, dass** die Achse des Zahnrads (54) parallel zur Welle (10) oder orthogonal zu dieser verläuft.

## Claims

1. Apparatus for determining a torque which is exerted on a shaft (10), with the shaft (10) having a first shaft section (12) and a second shaft section (14), and it being possible for the two shaft, sections (12 and 14) to rotate with respect to one another, having a multi-pole magnetic ring (16), which surrounds the first shaft section (12) and is connected to the said first shaft section, and a staler holder (22) which is fixed to the second shaft section (14), with two stator elements (24, 30) being fixed to the stator holder (22) and each stator element (24, 30) hating fingers (26, 32) which project in the axial or radial direction and are arranged in a manner distributed uniformly at least over part of the circumference and have gaps between them, with the magnetic ring (16) being associated with the fingers (26) of one stator element (24) and with the fingers (32) of the other stator element (30), **characterized in that** a second magnetic ring (36) is arranged on one of the two shaft sections (12, 14) and at least one magnet sensor (48) is associated with this magnetic ring (36), and **in that** the second magnetic ring (36) has two magnetic tracks.

2. Apparatus according to Claim 1, **characterized in that** the second magnetic ring (36) is a multipole magnetic ring,

3. Apparatus according to one of the preceding claims, **characterized in that** a magnet sensor (48) is associated with each magnetic track.

4. Apparatus according to one of the preceding claims, **characterized** on that a single printed circuit board (42) for holding the sensors (50) which are associated with the stator elements (24, 30) and the at least one sensor (48) which is associated with the second magnetic ring (36) is provided.

5. Apparatus according to Claim a 4. **characterized in that** the printed circuit board (42) is accommodated in a housing (38).

6. Apparatus according to one of the receding claims, **characterized in that** the stator holder (22) has an external tooth system (52), and the external tooth system (52) meshes with a gearwheel (54) and forms a step-up transmission.

7. Apparatus according to Claim 6, **characterized in that** the gearwheel (54) is fitted with a magnet (56).

8. Apparatus according to Claim 7, **characterized in that** a sensor (58) is associated with the magnet (56).

9. Apparatus according to Claim 4 and Claim 8, **characterized in that** the sensor (58) is arranged on the printed circuit board (42).

10. Apparatus according to one of Claims 6 to 9, **characterized in that** the axis of the gearwheel (54) runs parallel to the shaft (10) or orthogonally to the said shaft.

## Revendications

1. Dispositif de détermination d'un couple de rotation s'exerçant sur un arbre (10), l'arbre (10) présentant une première section d'arbre (12) et une deuxième section d'arbre (14) et les deux sections d'arbre (12 et 14) ne pouvant pas tourner l'une par rapport à l'autre, avec une bague magnétique (16) à pôles multiples entourant la première section d'arbre (12) et reliée à elle et un porte-stator (22) fixé à la deuxième section d'arbre (14), deux éléments de stator (24, 30) étant fixés au porte-stator (22) et chaque élément de stator (24, 30) présentant en direction axiale ou radiale des doigts (26, 32) saillants disposés de façon régulièrement répartie sur une partie au moins de la périphérie et comportant entre eux des espaces, la bague magnétique (16) étant associée aux doigts (26) du premier élément de stator (24) et aux doigts (32) de l'autre élément de stator (30), **caractérisé en ce qu'**une deuxième bague magnétique (36) est disposée sur une des deux sections d'arbre (12, 14) et qu'au moins un capteur magnétique (48) est associé à cette bague magnétique (36) et que la deuxième bague magnétique (36) comporte deux pistes magnétiques.

2. Dispositif selon la revendication 1, **caractérisé en ce que** la deuxième bague magnétique (36) est une bague magnétique à pôles multiples.

3. Dispositif selon l'une quelconque des revendications précédentes, **caractérisé en ce qu'**un capteur magnétique (48) est associé à chaque piste magnétique.

4. Dispositif selon l'une quelconque des revendications précédentes, **caractérisé en ce qu'**une seule platine (42) est prévue pour le logement des capteurs (50) associés aux éléments de stator (24, 30) et de l'au moins un capteur (48) associé à la deuxième bague magnétique (36).

5. Dispositif selon la revendication 4, **caractérisé en ce que** la platine (42) est logée dans un boîtier (38).

6. Dispositif selon l'une quelconque des revendications précédentes **caractérisé en ce que** le porte-stator (22) présente un endentement extérieur (52) et que l'endentement extérieur (52) s'engrène avec une roue dentée (54) et forme un engrenage de démultiplication.

7. Dispositif selon la revendication 6, **caractérisé en ce que** la roue dentée (54) est équipée d'un aimant (56).

8. Dispositif selon la revendication 7, **caractérisé en ce qu'**un capteur (58) est associé à l'aimant (56).

9. Dispositif selon la revendication 4 et la revendication. 8, **caractérisé en ce que** le capteur (58) est disposé sur la platine (42).

10. Dispositif selon l'une quelconque des revendications 6 à 9, **caractérisé en ce que** l'axe de la roue dentée (54) s'étend parallèlement du l'arbre (10) ou perpendiculairement à lui.
